# EUROPÄISCHE PATENTANMELDUNG

(11) **EP 1 024 583 A2**
(43) Veröffentlichungstag der Anmeldung: **02.08.2000**
(21) Anmeldenummer: 00101799.5
(22) Anmeldetag: 28.01.2000
(51) Int. Cl.: H02K 5/12, H02K 15/03

(54) **Vollverkapselter Rotor**

(30) Priorität: 28.01.1999 DE 19903251
(71) Anmelder: WILO GmbH, D-44263 Dortmund (DE)
(72) Erfinder: Dreihaus, Uwe, 59067 Hamm (DE); Lütkenhaus, Norbert, 59399 Olfen (DE); Kech, Hansjürgen, 58313 Herdecke (DE); Weber, Hermann, 58313 Herdecke (DE)
(74) Vertreter: COHAUSZ HANNIG DAWIDOWICZ & PARTNER

(57) **Zusammenfassung**

Verfahren zur flüssigkeitsdichten Verkapselung eines Rotorpaketes einer elektrischen Maschine, insbesondere eines Elektromotors zum Betrieb einer Spaltrohrpumpe, wobei das die Welle umgebende und Permanentmagneten tragende Rotorpaket zur Abdichtung von einer Hülse aus Blech umgeben ist, wobei die Hülse 1 mittels Beaufschlagung durch axial gerichtete magnetische Felder, die radiale Kräfte erzeugen, auf das Rotorpaket aufgeschrumpft wird.

## Beschreibung

Die Erfindung betrifft ein Verfahren zur flüssigkeitsdichten Verkapselung des Rotorpaketes einer elektrischen Maschine, insbesondere eines Elektromotors zum Betrieb einer Spaltrohrpumpe, wobei das die Welle umgebende und Permanentmagnete tragende Rotorpaket von einer Hülse aus Blech zur Abdichtung umgeben ist. Die Erfindung betrifft gleichzeitig eine elektrische Maschine mit einem die Welle tragenden und Permanentmagnete aufweisenden Rotorpaket, wobei das Rotorpaket zur Abdichtung von einer Hülse aus Blech umgeben ist.

Insbesondere bei elektrisch betriebenen Spaltrohrpumpen, wo ein Spalttopf den Magneten tragenden Rotor vom Stator trennt, ist es bekannt, den Rotor gegen das ihn umgebende Medium abzudichten. Eine derartige Abdichtung ist einerseits notwendig, um die Permanentmagneten zu schützen. Gleichzeitig schließt die Hülse das Rotorpaket ab und hält es mechanisch zusammen.

Die bislang bekannten, mit einer Hülse gekapselten Rotoren sind insofern aufwendig herzustellen, als zunächst der mit Permanentmagneten bestückte Magnetträger oder Tragkörper von einer Hülse umgeben wird, bevor auf die Stirnflächen des Magnetträgers Deckscheiben aufgesetzt werden. Der Rotor muß hierfür eng tolerierte Außendurchmesser und eine runde Form besitzen, damit die im Allgemeinen verwendete Edelstahlhülse in einem Preßvorgang montiert werden kann. Die Deckscheiben sind gegenüber dem Magnetträger und der Welle mittels eingelegter O-Ringe abgedichtet. Nach dem Zusammenfügen der einzelnen Bauteile werden die Enden der Hülse mechanisch umgebördelt, so daß sie den jeweiligen Rand der Deckscheibe umgreifen und halten. Problematisch an den bislang bekannten Rotoren ist, daß für eine absolute Dichtigkeit nicht garantiert werden kann. So kommt es insbesondere durch eine mangelhafte Bördelung zu Leckagen und nach dem Eindringen des Pumpmediums zu einer Zerstörung der (Neodym-Eisen-Bor) Magnete.

Aufgabe der Erfindung ist es, ein Verfahren bereitzustellen, mit dem der Rotor einer elektrischen Maschine unter Gewährleistung hoher Dichtigkeit auf einfache Weise kostengünstig gekapselt werden kann. Gleichzeitig ist es Aufgabe der Erfindung eine elektrische Maschine mit einem einfach zu fertigenden und dicht verkapselten Rotor zu schaffen.

Diese Aufgaben werden durch ein Verfahren nach Anspruch 1 und durch die Maschine nach Anspruch 6 gelöst.

Besonders vorteilhaft an dem erfindungsgemäßen Verfahren ist, daß die Rotorpakete durch das magnetische Verformen der Hülsen auf einfache Weise gas- und flüssigkeitsdicht gegen das umgebende Medium abgeschlossen werden. Die Beaufschlagung der Hülse durch magnetische Kräfte bewirkt ein Zerfließen des Materials in Richtung der Kraft. Das magnetische Verformen ist berührungslos und daher besonders schonend für die beaufschlagten Werkstücke, insbesondere bei Verwendung einer beschichteten Hülse (Kunststoff oder Eloxan Beschichtung). Die Bördelung der Hülse um den Magnethalter geschieht dabei besonders homogen und dicht. Auf diese Art gefertigte Rotoren tragen zu einer Verringerung der Herstellungskosten und zu einer Erhöhung der Zuverlässigkeit der elektrischen Maschinen bei. Ein zusätzliches Verkleben, Verlöten oder Verschweißen der Hülse mit den Abdeckplatten ist nicht mehr erforderlich.

Vorteilhafterweise werden die magnetischen Felder durch einen gepulsten Strom erzeugt, der in in einem Impulswerkzeug Umfangsrichtung um die Hülse geführt wird. Dabei wird in der Hülse ein ebenfalls in Umfangsrichtung aber insbesondere in entgegengesetzter Richtung verlaufender Strom induziert, so daß eine resultierende Kraft in radialer Richtung entsteht. Die Strompulse haben vorteilhafterweise eine Pulsdauer von etwa 0.1 ms und eine Stärke von 500 kA. Die entsprechenden durch Induktion erzeugten Magnetfelder haben eine Feldstärke von bis zu 200.000 A/cm. Um eine eventuelle Beeinträchtigung der Magnetisierung der Permanentmagneten zu kompensieren, ist es vorteilhaft, die Permanentmagneten entweder erst nach der Verkapselung zu magnetisieren oder die Magnetisierung durch Anlegen eines Magnetfeldes in radialer Richtung aufzufrischen. Die Hülse dient dabei generell zur Aufnahme der Fliehkräfte, zur Verfestigung des Paketes und zur Abdichtung gegen das Medium.

Mit dem erfindungsgemäßen Verfahren ist es möglich, eine elektrische Maschine, insbesondere einen Elektromotor zum Antrieb einer Spaltrohrpumpe, zu schaffen, bei dem die Hülse aus Blech unter Einwirkung radial gerichteter durch axialer magnetische Felder erzeugte Kräfte auf das Rotorpaket aufgeschrumpft ist. Dabei sind zwei vorteilhafte Ausführungsformen des Rotorpaketes möglich:

In einer Ausführungsform wird ein die Magneten tragender Tragkörper aus Metall, der den magnetischen Rückschluß gewährleistet, auf die Welle gepreßt. Nachdem die Magneten eingesetzt sind werden in die Lücken zwischen den Segmenten Kunststoffhalter eingesetzt, um ein Verrutschen der Segmente zu verhindern. Auf die Stirnseiten der Tragkörper werden je eine mit einer zentralen Bohrung für die Welle versehene Abdeckscheibe, insbesondere aus Blech oder Kunststoff, aufgesetzt ist. Nach dem Aufschrumpfen der Hülse umgreifen deren Enden die äußeren Ränder beider Abdeckscheiben. Eine derartige Abdeckscheibe wird vorteilhafterweise mit einem O-Ring gegen die Welle und gegen den Magnetträger abgedichtet.

In einer anderen Ausführungsform hat das Rotorpaket einen zylindrischen Magnetträger, der um den magnetischen Schluß zu wahren mit einem Tragkörper bestückt ist und der einen für die Aufnahme der Magneten vorgesehenen und als Tragkäfig ausgebildeten Kunststoffhalter aufweist. Der Tragkäfig schließt in diesem Falle in axialer Richtung mit zwei Deckeln aus Kunststoff ab, die in ihrem Durchmesser dem Durchmesser des Rotorpaketes entsprechen. Auf den Magnetträger wird nunmehr die Hülse aufgeschrumpft. Die aufgeschrumpfte Hülse übergreift dabei die Deckel des Kunststoffhalters. Auf eine extra Abdeckplatte kann damit verzichtet werden.

Vorteilhafterweise sind die Abdeckscheiben im äußeren Umfang mit einer Nut oder einer Sicke versehen, in die das Material der Hülse einfließen kann. Durch diese Einrichtung ist eine besonders zuverlässige Abdichtung gewährleistet. In einer besonders vorteilhaften Ausführungsform ist die Hülse aus einem leicht verformbaren Metall, insbesondere aus Kupfer, Aluminium oder einer Leichtmetallegierung, gefertigt. Diese Werkstoffe eignen sich besonders für die Veformung durch magnetische Kräfte. Die Wandstärke der Hülse ist kleiner als 1 mm. Der Innendurchmesser der Hülse ist vorteilhafterweise so bemessen, daß er ungefähr 0.5 mm größer ist als der Außendurchmesser des Rotorpaketes. So kann die Hülse einerseits bequem auf das Rotorpaket aufgeschoben werden, während andererseits die durch die magnetischen Kräfte hervorgerufene Verformung ausreicht, um den Spalt sicher zu verschließen. Weiterhin kann das aus Tragkörper und Magnetsegmenten bestehende Paket eine gröbere Toleranz besitzen, wodurch das üblicherweise notwendige Schleifen des Rotoraußendurchmessers entfallen kann.

Eine besondere Ausführungsform eines erfindungsgemäßen Rotors ist in den Zeichnungen dargestellt und werden im folgenden näher beschrieben. Es zeigen:
- **Figur 1**: ein Rotorpaket
- **Figur 2**: ein Rotorpaket in einem Magnetisierungswerkzeug
- **Figur 3**: der Verlauf von Feldlinien zwischen dem Rotorpaket in einem Magnetisierungswerkzeug zu

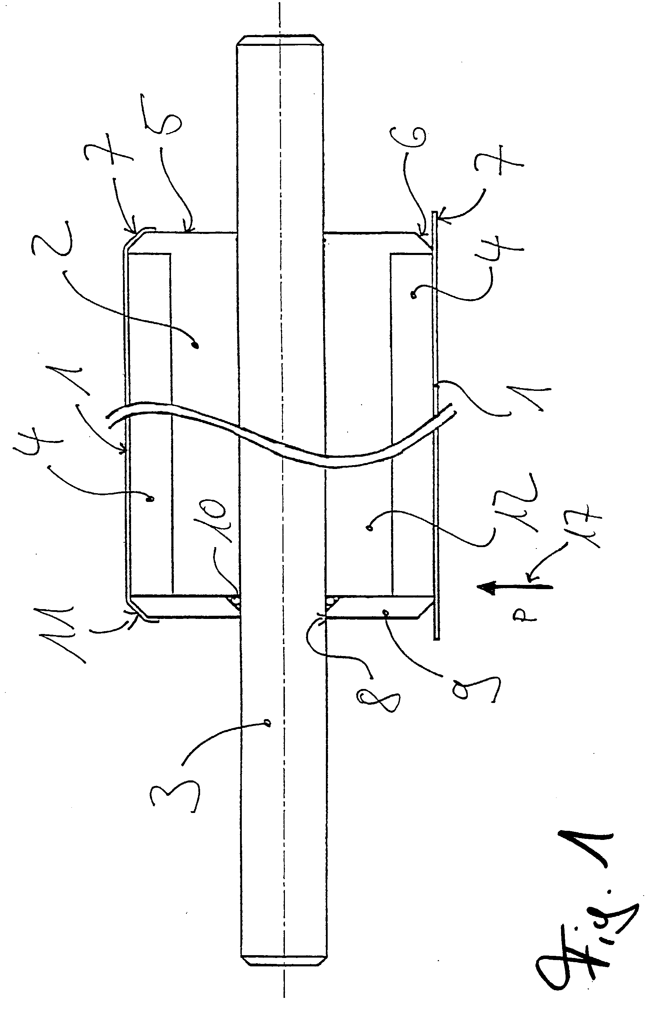

Die Figur 1 stellt in ihrer unteren Hälfte den Zustand eines Rotorpaketes mit einer aufgeschobenen Hülse 1 dar, bevor die magnetische Verformung vorgenommen wurde. Das Rotorpaket umfaßt dabei einen mit Permanentmagneten 4 bestückten Magnetträger 2, der von der Hülse 1 umschlossen ist. Die untere Hälfte der Figur 1 zeigt den Zustand vor die obere Hälfte nach der Verformung. Andererseits zeigt die Figur auf ihrer linken Seite eine Ausführungsform eines Magnethalters 2 und auf der rechten Seite eine andere Ausführungsform.

Die Figur 1 zeigt eine Welle 3 einer nicht dargestellten elektrischen Maschine. Auf der Welle ist der Magnetträger 2 aufgesetzt und mittels einer Preßpassung oder einer Passung mit Starring gehalten. Der Magnetträger 2 aus Kunststoff weist Ausnehmungen auf, in denen die Permanentmagnete 4 in entsprechenden Ausnehmungen einliegen. Auf den mit Permanentmagneten 4 versehenen Magnetträger 2 ist die Hülse 1 aus dünnem Blech in Spielpassung aufgeschoben (untere Bildhälfte). Die rechte Bildhälfte zeigt einen Magnetträger 2, der in axialer Richtung mit einer planen Stirnwand 5 (Deckel) abschließt. Die Stirnwand 5 ist am äußeren Rand 6 mit einer Phase versehen und überragt den eingelegten Permanentmagneten 4 in radialer Richtung. Nach der Einwirkung der Magnetfelder, die auf die Hülse einwirkende radiale Kräfte erzeugen (Pfeil P), übergreift das Ende 7 der Hülse 1 den Rand 6 (obere Bildhälfte) und dichtet damit die eingeschlossenen Permanentmagneten 4 gegen das Medium ab. Die Hülse 1 ist somit auf den Magnetträger 2 aufgeschrumpft.

In dem in der linken Bildhälfte dargestellten Ausführungsbeispiel ist auf die Stirnseite des Magnetträgers, von dem in diesem Falle der metallische Tragkörper 12 dargestellt ist, eine mit einer zentralen Bohrung 8 versehene Abdeckscheibe 9, die insbesondere aus Blech oder Kunststoff gefertigt ist, aufgesetzt. Die Abdeckscheibe 9 ist mit einem O-Ring 10 gegen die Welle 3 und gegen die Stirnseite des Tragkörper 12 abgedichtet. Nach dem magnetischen Verformen umgreift das Ende 11 der Hülse 1 den äußeren angephasten Rand der Abdeckscheibe 9.

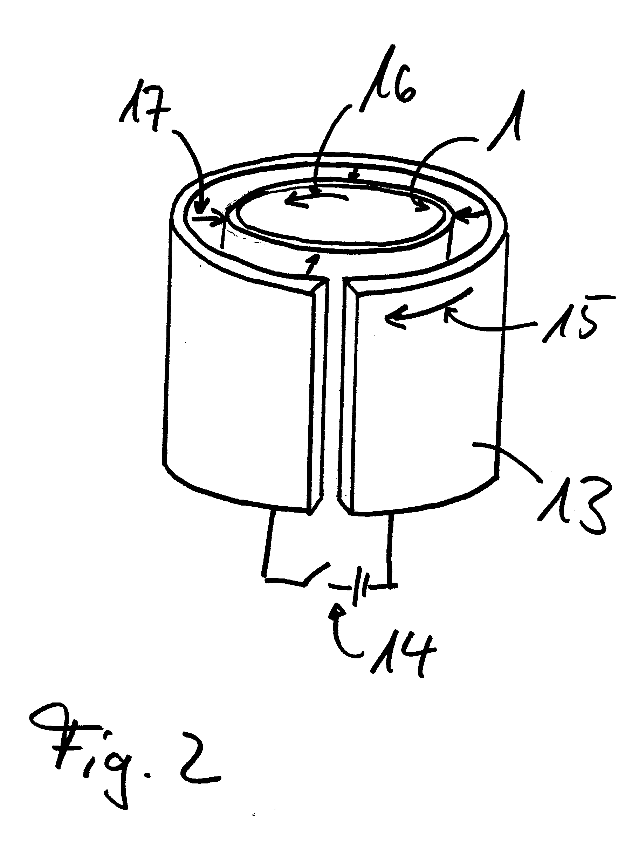

Figur 2 zeigt ein Puls-Werkzeug 13 in Form eines metallischen Zylinders mit einer axialen Kerbe 18, der die Hülse 1 zu deren Beaufschlagung mit magnetischen Feldern umgreift. Eine Stromquelle 14, die zur Erzeugung des im Puls-Werkzeug 13 benötigten Stromes dient, ist schematisch dargestellt. Mit der Stromquelle 14 wird im Werkzeug ein in Umfangsrichtung verlaufender Strom 15 generiert, der in der Hülse 1 einen in entgegengesetzter Richtung umlaufenden Strom 16 induziert. Beide Ströme 15 und 16 erzeugen axiale magnetische Felder, die zwischen der Hülse 1 und dem Wekzeug 13 komprimiert werden und so radial gerichtete und homogen auf die Hülse 1 verteilte Kräfte (Pfeile 17) erzeugen. Diese radialen Kräfte 17 schrumpfen die Hülse 1 auf das Rotorpaket und bördeln den Rand 7 der Hülse 1 um die Stirnwände 5.

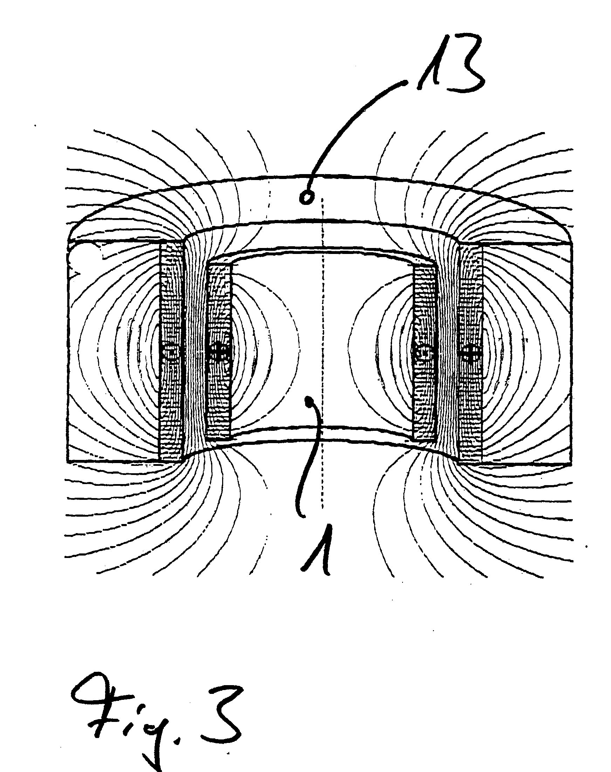

Figur 3 zeigt den Verlauf der magnetischen Felder, die zwischen der Hülse 1 und dem Werkzeug 13 komprimiert sind. Der Verlauf der entgegengesetzt gerichteten Ströme ist durch die Symbole ⊙ und ⊕ dargestellt.

## Patentansprüche

1. Verfahren zur flüssigkeitsdichten Verkapselung eines Rotorpaketes einer elektrischen Maschine, insbesondere eines Elektromotors zum Betrieb einer Spaltrohrpumpe, wobei das die Welle umgebende und Permanentmagneten tragende Rotorpaket zur Abdichtung von einer Hülse aus Blech umgeben ist,
**dadurch gekennzeichnet,** daß die Hülse (1) durch Beaufschlagung mittels magnetischer Felder auf das Rotorpaket aufgebracht, insbesondere aufgeschrumpft wird.

2. Verfahren nach Anspruch 1,
**dadurch gekennzeichnet,** daß die magnetischen Felder axial zum Rotorpaket gerichtet sind und eine radial auf die Hülse (1) wirkende Kraft (17) erzeugen .

3. Verfahren nach Anspruch 1 oder 2,
**dadurch gekennzeichnet,** daß die magnetischen Felder durch die Induktion von in der Hülse (1) in Umfangsrichtung verlaufendem Strom erzeugt werden, wobei der Strom in der Hülse von einem Strom in einem die Hülse (1) umgebenden Werkzeug (13) induziert wird.

4. Verfahren nach Anspruch 3,
**dadurch gekennzeichnet,** daß die Ströme im Werkzeug gepulst sind und Stärken von über 100 kA aufweisen und die magnetischen Felder durch die Induktion von in der Hülse (1) in Umfangsrichtung verlaufenden Strömen erzeugt werden.

5. Verfahren nach einem der vorherigen Ansprüche,
**dadurch gekennzeichnet,** daß die Permanentmagneten (4) nach der Verkapselung magnetisiert werden.

6. Elektrische Maschine, insbesondere Elektromotor zum Betrieb einer Spaltrohrpumpe, mit einem die Welle tragenden und Permanentmagneten aufweisenden Rotorpaket, wobei das Rotorpaket zur Abdichtung von einer Hülse aus Blech umgeben ist,
**dadurch gekennzeichnet,** daß die Hülse (1) unter Einwirkung magnetischer Felder, die insbesondere axial gerichtet sind und dabei radiale Kräfte (17) erzeugen, auf das Rotorpaket aufgeschrumpft ist.

7. Elektrische Maschine nach Anspruch 6,
**dadurch gekennzeichnet,** daß das Rotorpaket zylindrisch geformt ist und einen Magnetträger (2), insbesondere aus Kunststoff, aufweist, der die Permanentmagneten (4) trägt und der in axialer Richtung mit zwei planen Stirnwänden (5) abschließt.

8. Elektrische Maschine nach Anspruch 7,
**dadurch gekennzeichnet,** daß die Hülse (1) derart auf das Rotorpaket aufgeschrumpft ist, daß die Enden (7) der Hülse (1) die äußeren Ränder der Stirnwände des Magnetträgers (2) umgreifen.

9. Elektrische Maschine nach einem der vorherigen
Ansprüche, **dadurch gekennzeichnet,** daß auf die Stirnseiten eines Tragkörpers (12) je eine mit einer zentralen Bohrung (8) für die Welle versehene Abdeckscheibe (9), insbesondere aus Blech, aufgesetzt ist.

10. Elektrische Maschine nach Anspruch 9,
**dadurch gekennzeichnet,** daß die Hülse (1) derart auf das Rotorpaket aufgeschrumpft ist, daß die Enden (11) der Hülse (1) die äußeren Ränder der Abdeckscheiben (9) umgreifen.

11. Elektrische Maschine nach einem der vorherigen Ansprüche, **dadurch gekennzeichnet,** daß die Abdeckscheiben (9) mit O-Ringen (10) gegen die Welle (3) und/oder gegen die Stirnseite des Tragkörpers (12) abgedichtet sind.

12. Elektrische Maschine nach einem der vorherigen Ansprüche, **dadurch gekennzeichnet,** daß die Abdeckscheiben (9) im äußeren Umfang mit einer Nut oder einer Sicke versehen sind.

13. Elektrische Maschine nach einem der vorherigen Ansprüche, **dadurch gekennzeichnet,** daß die Hülse (1) aus einem leicht verformbaren Metall, insbesondere aus Kupfer, Aluminium oder einer Leichtmetallegierung, gefertigt ist.

14. Elektrische Maschine nach einem der vorherigen Ansprüche, **dadurch gekennzeichnet,** daß die Magnetfelder in Pulsen einer zeitlichen Dauer von weniger als einer Sekunde gepulst sind und eine Stärke von etwa 200 000 A/cm aufweisen.

15. Elektrische Maschine nach einem der vorherigen Ansprüche, **dadurch gekennzeichnet,** daß die Hülse mit einem geringen Spiel, insbesondere von weniger als 0.5 mm, auf den Magnetträger aufschiebbar ist.
